# FASCICULE DE BREVET EUROPEEN

(11) **EP 3 283 684 B1**
(45) Date de publication et mention de la délivrance du brevet: **12.06.2019**
(21) Numéro de dépôt: 16723411.1
(22) Date de dépôt: 14.04.2016
(51) Int. Cl.: D06Q 1/12, B32B 5/20, B32B 27/06, B32B 27/40, B44C 1/17

(54) **PROCEDE DE TRANSFERT A CHAUD SUR TEXTILE ET COMPLEXE MULTICOUCHE EXPANSIBLE POUR CE PROCEDE**
VERFAHREN ZUR WÄRMEÜBERTRAGUNG AUF TEXTILIEN UND EXPANDIERBARER MEHRSCHICHTIGER KOMPLEX DAFÜR
METHOD FOR HEAT TRANSFER ONTO TEXTILES AND EXPANSIBLE MULTILAYER COMPLEX THEREFOR

(30) Priorité: 16.04.2015 FR 1553360
(43) Date de publication de la demande: 21.02.2018
(73) Titulaire: Chomarat Textiles Industries, 07160 Le Cheylard (FR)
(72) Inventeur: DEVIDAL, Dominique, 07320 Saint Agreve (FR)
(74) Mandataire: Cabinet Laurent & Charras
(86) Numéro de dépôt international: PCT/FR2016/050876
(87) Numéro de publication internationale: WO 2016/166489

(56) Documents cités:
- EP-A1- 0 075 832
- EP-A1- 2 418 077
- EP-A2- 0 304 550
- WO-A2-00/15444
- GB-A- 2 329 348
- US-A- 5 667 614

## Description

### Domaine technique

L'invention se rapporte à l'industrie textile et plus particulièrement à l'application d'un marquage ou d'un motif de décoration sur un article textile par la technique de transfert à chaud. Elle trouve une application plus particulière dans les secteurs de l'habillement, de la chaussure, de la maroquinerie, des articles de sport ou encore des articles publicitaires.

### Techniques antérieures

Dans ces secteurs ou pour d'autres applications, il est connu de réaliser des marquages ou des décorations sur des articles textiles par une technique de transfert à chaud.

On utilise généralement pour cela des films de transfert thermocollants, préalablement découpés selon la forme du marquage ou du motif à appliquer, que l'on place sur le textile et que l'on colle sur celui-ci en le chauffant au moyen d'un fer à repasser ou plus préférentiellement d'une presse à plateau chauffant.

Ces produits de décoration dits de transfert à chaud se présentent classiquement sous la forme d'un film plat et monocouche, de composition homogène.

Certains sont colorés dans la masse et sont donc mono-couleur. Seule une découpe appropriée permet alors d'obtenir des motifs variés.

D'autres peuvent être imprimés numériquement par des machines jet d'encres spéciales, puis découpés, ce qui permet d'obtenir des motifs multicolores beaucoup plus variés. En revanche, les décorations obtenues restent plates et sans reliefs.

En connaît également des complexes décoratifs multicouches transférables à chaud, tels que par exemple ceux décrits dans les demandes de brevet antérieures EP 2.298.985 et EP 2.425.050 au nom du Demandeur, qui comportent plusieurs couches techniques superposées, dont par exemple une couche support, une couche colorée (décorative), une couche opacifiante et une couche thermocollante.

Cependant, ces couches sont d'épaisseur très fine à la manière d'un film et l'épaisseur globale du complexe multicouche obtenu reste très faible. En outre, l'effet décoratif est limité à une seule couche appelée couche colorée. Après transfert sur textile, la décoration obtenue est donc plate et sans relief.

On connait encore des décorations transférables en relief, les flocages par exemple, qui sont monocouches et monochromes.

On connait aussi le motif multicouche en relief, décrit dans le document GB 2 329 348, qui doit être fixé sur un vêtement par soudage à haute fréquence.

Ce motif est constitué d'une couche inférieure en PVC, polyuréthane ou acrylique, qui ne contient pas de plastifiant et qui est placé contre le vêtement lors de la fixation au tissu, d'une couche intermédiaire en PVC expansé pour donner du relief à l'ensemble et d'une couche supérieure en PVC non expansé qui peut être floquée électrostatiquement.

La couche inférieure, éventuellement à base de polyuréthane, a pour fonction d'empêcher la migration de la teinture du vêtement vers le motif. Il ne s'agit pas d'une couche décorative imprimable, mais d'une barrière de protection imperméable qui doit obligatoirement être placée entre le tissu et le motif en PVC afin de remplir son rôle de barrière. Avec le procédé décrit, cette couche inférieure est obligatoirement placée contre le tissu et n'est donc pas visible une fois le transfert effectuée.

En outre, l'expansion de la couche intermédiaire en PVC se fait à la fabrication, avant l'application sur le vêtement. Le motif obtenu est déjà en relief et ne peut donc pas être imprimé postérieurement à sa fabrication.

On connaît également des produits monocouches qui sont expansibles à la chaleur et qui gonflent dans la presse de transfert. Les décorations ainsi obtenues sont en relief, mais restent mono-couleurs. Lorsque l'on tente de les imprimer préalablement à leur transfert, le gonflage ultérieur du matériau provoque une atténuation du rendu des couleurs qui deviennent pâles et une imprécision dans le dessin, conférant à la décoration obtenue un aspect peu esthétique.

On connait enfin l'élément de transfert décrit dans la demande WO 00/15444 qui se compose d'une couche expansible à la chaleur en plastisol ou encre gonflante, et d'une feuille de transfert plus grande, fusible à la chaleur ou supportant une matière collante à chaud.

Cet élément de transfert est placé à l'intérieur d'un vêtement, sa couche expansible étant appliqué contre la face intérieure non visible du vêtement, intercalée entre le tissu et la feuille de transfert, puis l'ensemble est chauffé à la presse. Les bords de la feuille de transfert se collent au vêtement et la couche expansible gonfle formant un relief visible à travers le vêtement.

Avec un tel procédé de transfert, aucune des couches de l'élément n'est visible après le transfert, car elles sont toutes situées sous le vêtement. Seul un effet de relief peut être obtenu à travers le textile. Il est donc impossible de réaliser une couche décorative, notamment imprimable, visible sur la face avant du textile une fois le transfert réalisé. De même, il est impossible d'obtenir un liseré. En outre, l'élément de transfert décrit ne comporte aucune couche à base de polyuréthane.

### Exposé de l'invention

Ainsi, il est impossible avec les produits gonflants connus d'obtenir sur la tranche du produit expansé, une couleur différente de celle de la face supérieure de la décoration.

Un nouveau procédé de transfert à chaud et un produit transférable à chaud par un tel procédé, permettant d'obtenir une décoration en relief, de couleurs vives et variées, présentant un dessin précis quelconque pouvant être mis en valeur par une couleur différente au niveau de la tranche, est ainsi particulièrement souhaitable.

L'invention enseigne un tel procédé et un tel produit qui en outre reste plat avant son transfert à chaud sur le textile, ce qui permet de le stocker, de le transporter, de l'imprimer éventuellement, de le découper et de l'appliquer très facilement, aussi facilement qu'un produit classique plat de type film monocouche transférable à chaud. Avantageusement, le produit selon l'invention ne gonfle que lors de l'opération de transfert, de préférence, simultanément à cette opération de transfert et au moyen de la chaleur appliquée pour son thermocollage sur la matière textile.

L'invention enseigne ainsi un procédé de transfert à chaud sur un textile d'un complexe multicouche formé de plusieurs couches thermoplastiques superposées, dont une couche à base de polyuréthane et une couche expansible contenant un plastisol de polychlorure de vinyle gélifié et un agent d'expansion à chaud non expansé, afin de former sur ce textile un marquage ou une décoration.

Ce procédé comprend les étapes suivantes :
- placer le complexe multicouche sur la face avant visible du textile, sa couche à base de polyuréthane étant la plus éloignée du textile afin de constituer après transfert une couche décorative visible sur la face avant visible du textile ;
- appliquer des conditions de température et de pression provoquant l'adhésion du complexe multicouche sur la face avant visible du textile et l'expansion simultanée de sa couche expansible.

Selon un mode de réalisation de l'invention, on utilise pour ce procédé un complexe multicouche dont la couche à base de polyuréthane et la couche expansible sont de deux couleurs différentes afin de créer un effet de liseré autour de la couche décorative, visible sur la face avant du textile une fois la couche expansible expansée.

Selon un mode de réalisation du procédé selon l'invention, on prépare le complexe multicouche de manière qu'il présente la forme ou le motif du marquage ou de la décoration à former sur le textile, avant de le placer sur la face avant visible du textile.

Selon un mode de réalisation du procédé selon l'invention, l'étape de préparation du complexe multicouche comprend au moins une opération choisie parmi les opérations suivantes : impression d'un motif sur la couche à base de polyuréthane, découpage, et échenillage.

Selon un mode de réalisation du procédé selon l'invention, lesdites conditions de température et de pression sont obtenues au moyen d'une presse à plateau chauffant pour transfert sur textile.

Selon un mode de réalisation préférentiel du procédé selon l'invention, ces conditions de température et de pression correspondent à une température comprise entre 160 et 170°C et une pression voisine de deux bars, et sont appliquées pendant une durée comprise entre 10 et 30 secondes.

L'invention enseigne également un complexe multicouche transférable à chaud sur la face avant visible d'un textile par un tel procédé de transfert. Ce complexe est formé de plusieurs couches thermoplastiques superposées et comprend au moins :
- une couche à base de polyuréthane, destinée à être la couche décorative supérieure visible, une fois le complexe multicouche transféré sur la face avant visible du textile, et
- une couche expansible, contenant un plastisol de polychlorure de vinyle gélifié et un agent d'expansion à chaud non expansé.

La couche à base de polyuréthane et la couche expansible sont de deux couleurs différentes afin de créer un effet de liseré autour de la couche décorative une fois la couche expansible expansée.

Selon un mode de réalisation de l'invention, la couche à base de polyuréthane est opaque, teintée, ou imprimable.

Selon une variante préférentielle de l'invention, l'agent d'expansion à chaud comprend des microsphères constituées d'une enveloppe thermoplastique renfermant un gaz.

Selon une variante préférentielle de l'invention, la plage de température d'expansion de l'agent d'expansion est compatible avec une température de transfert à chaud du complexe multicouche sur un textile.

Selon un mode de réalisation de l'invention, le complexe multicouche comporte en outre une ou plusieurs couches choisies parmi : une couche thermocollante, une couche support, et une couche opacifiante.

Selon un mode de réalisation de l'invention, le complexe multicouche comporte une couche thermocollante à base d'un co-polyester ou de polyuréthane.

Selon un mode de réalisation préférentiel de l'invention, le complexe multicouche comporte une couche support à base de polyester, traitée pour être anti-adhérente.

La superposition, au sein d'un même complexe de transfert à chaud, d'une couche décorative et d'une couche expansible, qui sont de compositions différentes et de comportements thermiques différents, avec une dilatation et un retrait différents sous l'effet de la chaleur et du refroidissement, peut sembler de prime abord hasardeuse à l'homme du métier qui s'attend évidemment à rencontrer des problèmes d'interface lors du transfert à chaud du complexe multicouche sur le textile, et notamment une délamination ou une apparition de bulles entre ces deux couches et/ou un gaufrage inesthétique du motif. Naturellement, le fait que l'une de ces deux couches superposées gonfle à la chaleur alors que l'autre reste inchangée vient encore augmenter ses doutes quant au résultat pouvant être obtenu et a tendance à le décourager de cette voie.

Or, de façon surprenante, par le choix de la nature particulière de ces deux couches superposées dans le complexe selon l'invention, dont la composition est pour l'une à base de polyuréthane et pour l'autre à base de plastisol gélifié de polychlorure de vinyle (PVC) et d'un agent d'expansion à chaud non expansé, on évite les défauts auxquels l'homme du métier s'attendrait de manière évidente. Aucune délamination, ni bulle d'air n'apparait entre les couches pendant ou après l'opération de transfert à chaud et le motif obtenu ne présente aucun gaufrage ou plis inesthétiques.

Bien que multicouche, le complexe apparait, une fois transféré, comme un produit tridimensionnel monobloc, avec une face supérieure décorative lisse qui adhère parfaitement à une épaisseur pouvant avantageusement être de couleur différente afin de renforcer l'effet visuel de relief par un effet de liseré.

Le complexe multicouche selon l'invention parvient ainsi de façon inattendue à résoudre le problème technique, en conservant tous les avantages des différentes solutions antérieures mais sans en avoir les inconvénients.

### Description sommaire des figures

D'autres caractéristiques et avantages de l'invention apparaîtront à la lecture de la description détaillée qui va suivre, description faite en référence aux dessins annexés, dans lesquels :
- la figure 1 est une vue générale en perspective d'un exemple de complexe multicouche selon l'invention conditionné en rouleau ;
- la figure 2 est un agrandissement schématique du détail encerclé du complexe multicouche de la figure 1, qui illustre plus précisément la composition de ses différentes couches ;
- la figure 3 est une vue en perspective d'un échantillon du complexe multicouche de la figure 1 préparé pour son transfert sur un textile ;
- la figure 4 est une vue en perspective d'un article textile après transfert sur celui-ci de l'échantillon de la figure 3 ; et
- la figure 5 est une vue schématique de principe d'un exemple d'unité de fabrication du complexe multicouche de la figure 1.

Les éléments équivalents représentés sur les différentes figures portent les mêmes références numériques.

Bien entendu, les dimensions et en particulier les épaisseurs représentées sur les figures pour les différentes couches du complexe multicouche selon l'invention n'ont été données qu'à titre illustratif. Elles peuvent être nettement différentes des épaisseurs observées sur les produits réels et ont été largement exagérées pour permettre la représentation de l'invention et sa compréhension.

### Description détaillée

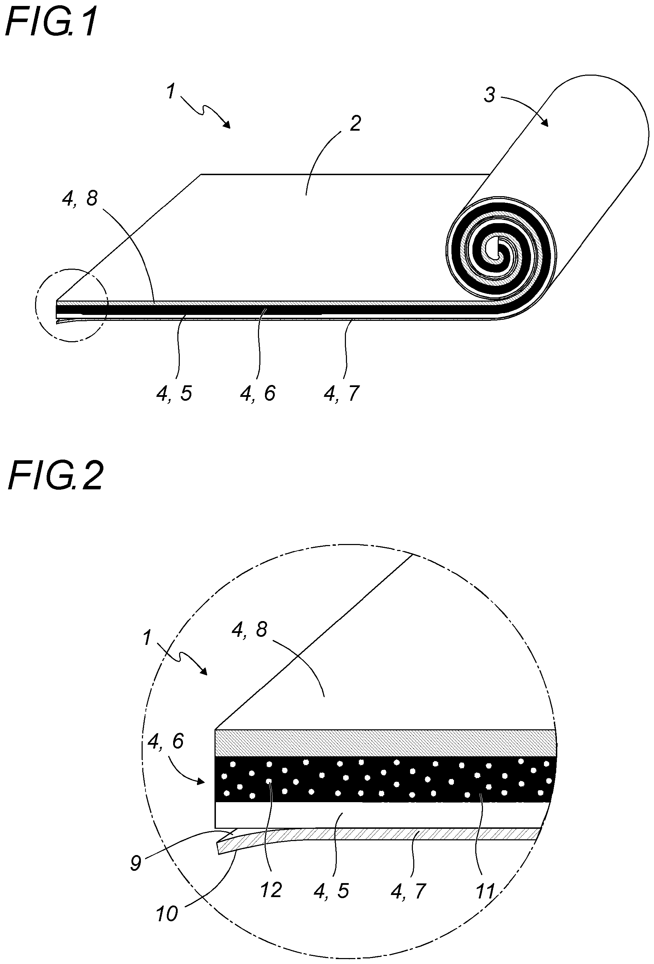

On a représenté sur les figures 1 et 2 un exemple de complexe multicouche 1 selon l'invention. Comme illustré sur la figure 1, celui-ci est avantageusement fabriqué et commercialisé sous la forme d'une bande large 2 de grande longueur enroulée sur elle-même en rouleau 3.

Comme exposé précédemment, le complexe multicouche 1 comporte un ensemble de couches 4 superposées, dont une couche 5 décorative et une couche expansible 6. Le mode de réalisation représenté comporte en outre de préférence une couche support 7 et une couche thermocollante 8.

La couche support 7 est par exemple réalisée en papier ou préférentiellement à base d'un polymère de type polyester, plus particulièrement de polyéthylène téréphtalate (PET). Il s'agit par exemple d'un film polyester commercialisé par la société COVEME sous le nom commercial de KTR 1682 TSL H.

Cette couche support 7 peut avantageusement présenter sur sa face extérieure 10 un traitement anti-adhérent, de manière à pouvoir se détacher facilement, grâce à quoi le complexe multicouche 4 peut être enroulé en rouleau 3 avant l'usage, puis aisément déroulé.

Son autre face 9, destinée à être orientée vers les autres couches 4 du complexe multicouche 1, peut indifféremment être brute ou être également traitée pour être anti-adhérente. Elle peut en outre présenter des reliefs de motifs quelconques afin de conférer par grainage un aspect de surface particulier à la couche 5 décorative.

Typiquement, cette couche support 7 présente une épaisseur de l'ordre d'une centaine de microns, par exemple comprise entre 75 et 125 microns et préférentiellement égale à 100 microns.

Cette couche support 7 peut être décollée et remplacée par la suite par une couche support adhésive, préférentiellement mise en place par laminage sur le complexe multicouche 1. Cette couche support adhésive, par exemple réalisée en polyester et sensiblement de même épaisseur que la couche support 7, présente une face intérieure 9 adhésive et une face extérieure 10 brute ou préférentiellement traitée pour être anti-adhérente.

Une telle face intérieure 9 adhésive permet avantageusement de mieux maintenir la décoration lors des étapes ultérieures de découpe et d'échenillage et ainsi de garantir un parfait positionnement relatif des différents éléments constitutifs de celle-ci, avant et pendant le transfert à chaud.

Sur la couche support 7, se trouve la couche 5 à base de polyuréthane. Comme elle est destinée à être la couche supérieure décorative visible de la décoration, une fois le complexe multicouche transféré sur le textile, elle est préférentiellement opaque et par exemple blanche ou teintée dans la masse. Elle peut en outre être imprimable afin de permettre la réalisation de décorations ou de marquages variés, avec un dessin multicolore quelconque.

La couche 5 décorative est préférentiellement réalisée à partir d'une formulation liquide de polyuréthane dans un solvant. Il peut s'agir par exemple d'une résine de polyuréthane dans un solvant de toluène-isobutanol, telle que celle commercialisée par la société THE DOW CHEMICAL COMPANY sous le nom de Vithane 659.

Cette formulation se solidifie après une étape de cuisson, au cours de laquelle le solvant s'évapore, pour devenir une couche plastique flexible très fine qui forme un film de surface. La couche 5 décorative présente ainsi de préférence une épaisseur de 20 à 30 microns.

Un exemple non limitatif de formulation appropriée pour la couche décorative à base de polyuréthanne est donné ci-dessous, les différents composants étant désignés par leurs noms commerciaux et les quantités données en parts massiques :

| | |
|---|---|
| - Vithane 659 | 80 |
| - Méthoxypropanol | 25 |
| - Vithane S20 | 0.15 |
| - Norene blanc | 25 |

La couche 5 décorative obtenue à partir de cette formulation présente avantageusement une bonne compatibilité avec le polychlorure de vinyle et une opacité élevée.

La couche expansible 6 est située sur la couche 5 décorative. Elle est réalisée à partir d'un plastisol de polychlorure de vinyle (PVC) 11 et intègre un agent d'expansion à chaud 12 qui se trouve à l'état non expansé.

Le plastisol de polychlorure de vinyle 11 est une pâte obtenue par la dispersion colloïdale d'une résine de polychlorure de vinyle en poudre dans un plastifiant liquide. Elle se gélifie à la cuisson au cours d'un processus irréversible de gélification.

L'agent d'expansion à chaud 12 est préférentiellement formé de microsphères thermoplastiques expansibles à la chaleur dans une plage de température appelée plage de température d'expansion. Ces microsphères sont des sphères creuses délimitées par une enveloppe thermoplastique encapsulant un gaz. Lorsqu'elles sont chauffées à une température comprise dans la plage de température d'expansion, cette enveloppe ramollit et la pression du gaz augmente, provoquant ainsi l'expansion des microsphères.

Afin que l'agent d'expansion à chaud 12 reste non expansé dans le plastisol de polychlorure de vinyle 11 qui est à l'état gélifié dans la couche expansible 6 du complexe multicouche 1 selon l'invention, il est important de choisir un agent d'expansion dont la plage de températures d'expansion est supérieure, ou au moins en grande partie supérieure, à la température de gélification du plastisol retenu.

On choisit ainsi de préférence un plastisol à basse température de gélification.

On choisit pour cela une résine polymère à faible valeur de K, ce qui favorise la gélification à basse température. La résine de PVC utilisée est par exemple celle commercialisée sous le nom de Solvin 360NA par la société SOLVAY qui présente une valeur de K égale à 60.

De même, on choisit un plastifiant permettant une gélification à basse température. Le plastifiant utilisé est par exemple celui commercialisé sous le nom de Eastman 168 plastifiant, commercialisé par la société EASTMAN CHEMICAL COMPANY, qui est un plastifiant pour PVC de type téréphtalate de di-(2-éthylhexyle) qui permet une gélification à une température d'environ 150°C.

Les microsphères retenues ont une plage de température d'expansion supérieure à cette température de gélification. Ces microsphères sont par exemple celles commercialisées par la société AKZO NOBEL sous le nom commercial d'Expancel® DU et plus particulièrement celles commercialisées sous le nom d'Expancel® 950DU80.

Selon une variante particulièrement avantageuse de l'invention, l'agent d'expansion à chaud 12 est également choisi avec une plage de température d'expansion compatible avec la température de transfert à chaud du complexe multicouche 1 sur un textile 13.

On entend par « compatible » dans cette demande de brevet, le fait que la plage de température d'expansion comprend une température permettant de réaliser efficacement le transfert du complexe multicouche 1 sur un textile 13 au moyen d'une presse de transfert à chaud classique, sans détériorer ni le complexe multicouche 1, ni le textile 13 sur lequel il doit être transféré.

Lorsque cette condition est remplie, l'expansion de la couche expansible 6 se produit avantageusement dans la presse de transfert à chaud simultanément à l'opération de transfert sur le textile 13.

A titre d'exemple non limitatif, une composition particulière de formulation adaptée pour la réalisation de la couche expansible 6 est donnée ci-dessous, les différents composants étant désignés par leurs noms commerciaux et les quantités données en parts massiques :

| | |
|---|---|
| - Solvin 360 NA | 100 |
| - Eastman 168 plastifiant | 55 |
| - Lastab DE 171 (additif pour PVC Ba/Zn commercialisé par la société LAMBERTI S.P.A.) | 1 |
| - Expancel 950 DU 80/ Eastman 168 | 25 |
| - Pigment empatté rouge | 6 |

Au-dessus de la couche expansible 6, le complexe multicouche 1 représenté comporte une couche thermocollante 8 qui sert à réaliser le collage du complexe multicouche 1 sur le textile 13 lors de son transfert à chaud.

Cette couche thermocollante est réalisée à partir d'un polymère par exemple de type co-polyester, polyuréthane ou analogue, et préférentiellement co-polyester. Son point de fusion est par exemple aux alentours de 130°C et son épaisseur est préférentiellement comprise entre 40 et 80 microns, plus préférentiellement voisine de 60 microns.

Bien que non représenté, le complexe multicouche peut comporter également une couche opacifiante intercalée entre la couche décorative et la couche expansible ou placée sous la couche expansible dont la fonction est d'empêcher que le coloris de la couche décorative ou de la couche expansible ne soit perturbé par le coloris de la couche expansible ou du textile respectivement. Typiquement, cette couche opacifiante présente une épaisseur de l'ordre de quelques dizaines de microns, et est typiquement voisine de 30 microns.

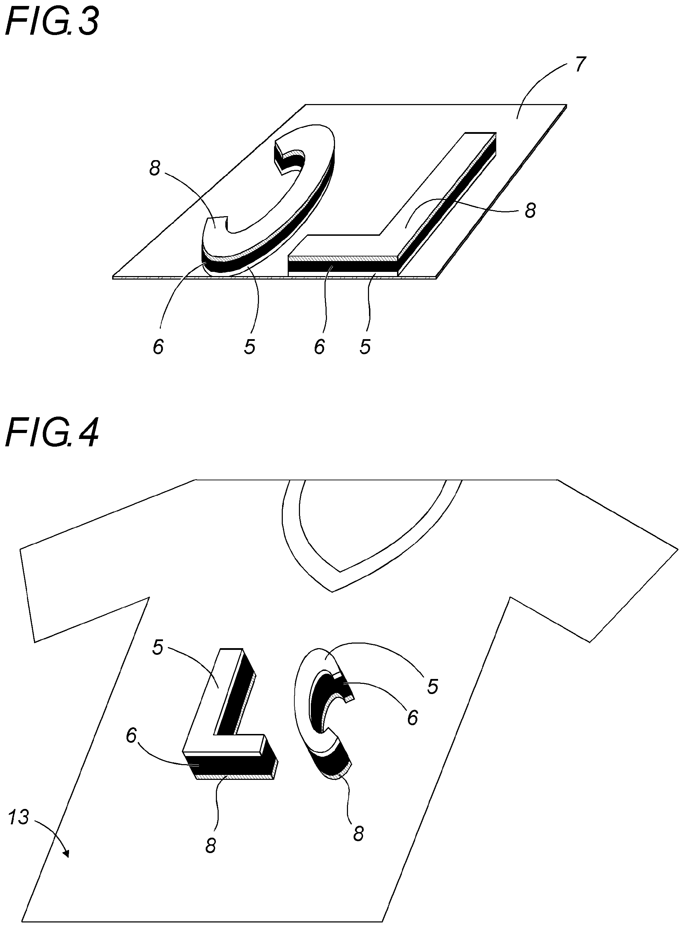

Ce complexe multicouche 1 peut être aisément transféré sur un textile 13 de nature quelconque, comme représenté sur les figures 3 et 4 qui illustrent un exemple du procédé de transfert selon l'invention.

Avant son transfert, le complexe est d'abord préparé de manière à présenter la forme ou le motif du marquage ou de la décoration à former sur le textile 13.

Pour cela, les étapes classiques de préparation d'une décoration pour transfert peuvent être réalisées. Il s'agit par exemple du découpage d'un lettrage ou d'un motif quelconque par exemple à l'aide d'un traceur numérique et de l'échenillage du motif découpé qui consiste à enlever les restes du complexe multicouche n'appartenant pas au motif à transférer.

Lorsque la décoration à transférer comprend plusieurs éléments détachés les uns des autres (plusieurs lettres par exemple), la couche support 7 est préférentiellement laissée intacte lors du découpage, afin de faciliter le transfert en garantissant un bon positionnement de ces éléments détachés les uns par rapport aux autres.

Un exemple de décoration préparée, réalisée à partir du complexe multicouche 1, a été représenté sur la figure 3.

Une variante du complexe multicouche 1 plus spécifiquement destinée à être imprimée peut également être envisagée.

Dans ce cas, la couche support 7 est retirée à la fabrication, afin de dévoiler la face de la couche 5 décorative qui constituera la face supérieure visible de la décoration après transfert.

Une couche support supplémentaire est alors rajoutée, préférentiellement par laminage, sur l'autre face du complexe multicouche 1, c'est-à-dire du côté de la couche thermocollante 8. Cette couche support supplémentaire est préférentiellement réalisée en une matière présentant une affinité avec la couche thermocollante 8 et par exemple en polyester. Ses faces peuvent être laissées brutes ou comportent un traitement anti-adhérent au niveau de la face extérieure.

Avant d'être transféré sur un textile 13, ce complexe multicouche est préparé comme précédemment afin de lui conférer la forme ou le motif du marquage ou de la décoration à réaliser. La préparation de la décoration s'effectue cette fois par l'autre côté du complexe multicouche 1 qui est retourné par rapport à l'exemple précédent.

La préparation comprend cette fois une étape d'impression d'un motif sur la couche 5 à base de polyuréthane, qui est imprimable au moyen d'une imprimante de type jet d'encre.

La décoration est ensuite découpée autour de l'impression, la couche support supplémentaire étant laissée intacte afin de maintenir le positionnement relatif des différents éléments de la décoration après découpe.

La décoration découpée est alors classiquement échenillée, puis recouverte d'un ruban ou film adhésif (« tape ») permettant de maintenir la décoration découpée afin d'enlever la couche support supplémentaire et servant de support pour le transfert.

Une fois la décoration préparée, elle est placée sur la face avant visible d'un textile 13, par exemple un tee-shirt comme représenté sur la figure 4, de façon que sa couche thermocollante 8 soit en contact avec la face avant du textile et que sa couche 5 décorative à base de polyuréthane soit la plus éloignée du textile afin de constituer la couche supérieure visible du marquage à former sur la face avant visible du textile 13.

Le textile 13 utilisé peut être de nature et de matière quelconques. Il s'agit par exemple d'un textile tissé, tricoté, ou non tissé, et par exemple composé de coton, acrylique, polyester, laine, soie, lin, ou de velours non-tissé.

L'ensemble est ensuite placé dans une presse à plateau chauffant pour transfert sur textile, afin de de lui appliquer des conditions de température et de pression provoquant la fusion de la couche thermocollante 8 et ainsi l'adhésion de la décoration à la surface de la face avant visible du textile 13.

Simultanément, l'agent d'expansion 12 contenu dans la couche expansible 6 gonfle et provoque une expansion de la couche expansive 6 dont l'épaisseur augmente notablement.

Le pressage sur le textile se fait par exemple à une température de 160 °C et une pression de 2 bars, pendant une durée de 20 secondes.

La couche expansible 6 devient apparente sur la tranche de la décoration en trois dimensions et ainsi à la lisière du motif formé ou imprimé sur la couche 5 décorative et visible sur la face supérieure de la décoration. Lorsque ces deux couches 5 et 6 sont de couleurs différentes, il en résulte un effet visuel de liseré ou de bordure mettant en relief le motif principal imprimé sur ou formé par la couche 5 décorative supérieure.

Grâce à l'invention, on obtient un effet de relief pour la décoration, qui peut encore être renforcé par un effet bi-couleurs dans l'épaisseur de la décoration.

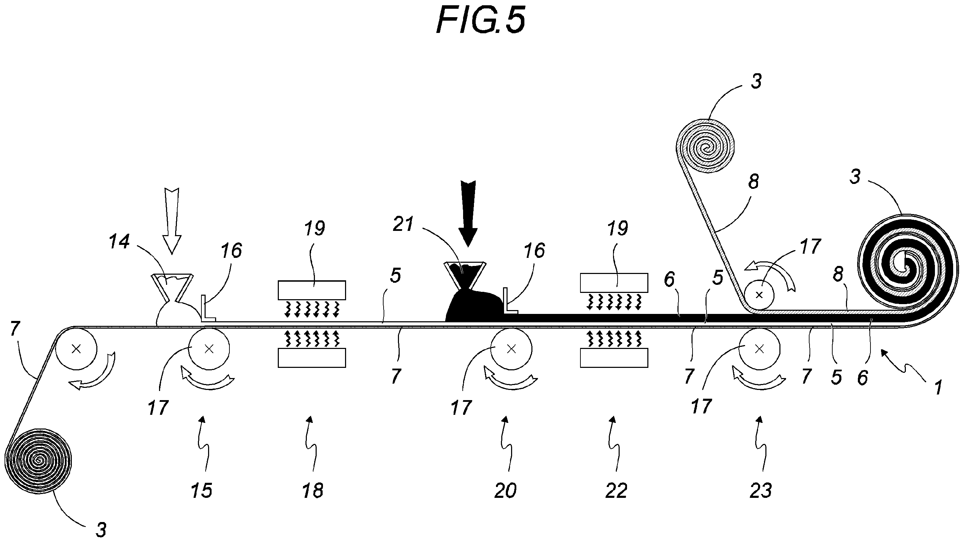

Afin de mieux illustrer l'invention, un exemple de procédé de fabrication du complexe multicouche 1 est décrit ci-dessous, en référence à la figure 5 qui représente schématiquement une unité de fabrication en continu de ce complexe multicouche. Bien entendu, des postes séparés et indépendants pour chacune ou certaines des étapes sont également envisageables.

On commence par faire défiler une bande de couche support 7, que l'on a préalablement déroulée si on l'achète conditionnée en rouleau 3 comme représenté.

On vient ensuite déposer par enduction une solution à base de polyuréthane 14 sur cette couche support 7 dans un premier poste d'enduction 15. L'étalement sur la bande de cette solution à base de polyuréthane et l'épaisseur de la couche de solution formée peuvent avantageusement être réglés au moyen d'une racle 16 calée sur un cylindre 17. On peut ainsi par exemple déposer cette solution en quantité voisine de 30 grammes de matière sèche par mètre carré.

La bande arrive ensuite dans un poste de cuisson 18 où elle passe dans un four 19 qui chauffe la solution à base de polyuréthane 14 afin d'en évaporer le solvant et ainsi de former la couche 5 à base de polyuréthane, décorative, sur la couche support 7.

Après un léger refroidissement permettant de s'assurer que la bande se trouve à une température inférieure à la plage de température d'expansion de l'agent d'expansion 12, elle arrive à un deuxième poste d'enduction 20 dans lequel on vient déposer, sur la couche 5 décorative, une pâte 21 composée d'un mélange de plastisol de PVC non gélifié et d'agent d'expansion à chaud non expansé. Là encore, la quantité de matière déposée, son étalement et l'épaisseur de la couche résultante peuvent être peuvent avantageusement être réglés au moyen d'une racle 16 calée sur un cylindre 17. On peut ainsi par exemple déposer cette pâte en quantité correspondant environ à 360 grammes par mètre carré.

La bande arrive ensuite au niveau d'un poste de gélification 22 où se trouve un autre four 19 qui vient chauffer le plastisol de polychlorure de vinyle jusqu'à sa température de gélification, mais sans atteindre la plage de température d'expansion de l'agent d'expansion qu'il contient. La couche expansible 6, contenant un plastisol gélifié de polychlorure de vinyle et un agent d'expansion à chaud non expansé, est ainsi formée sur la couche 5 décorative.

Un dernier poste, le poste de laminage 23, permet d'appliquer par laminage entre deux cylindres 17 la couche thermocollante 8, préalablement dévidée d'un rouleau 3, sur la couche expansible 6.

On obtient en sortie de ce poste le complexe multicouche 1 de la figure 1. Celui-ci est préférentiellement enroulé sur lui-même en bobine ou rouleau 3 en vue de son stockage et de sa commercialisation.

Bien entendu, le procédé de fabrication et en conséquence l'unité de fabrication permettant de le mettre en oeuvre seront modifiés en fonction de la structure particulière du complexe multicouche à fabriquer de manière à s'adapter à la nature, au nombre et à l'ordre de ses couches 4.

Ainsi par exemple, si l'on souhaite fabrique un complexe multicouche spécifiquement destinée à être imprimée, le procédé de fabrication précédemment décrit est complété par une étape de démoulage consistant à décoller et à retirer la couche support 7 de la couche 5 décorative.

Cette étape de démoulage est suivie d'une étape de laminage, préférentiellement réalisée sur calandre simple légèrement chauffée, qui permet d'appliquer et de fixer la couche support supplémentaire à la couche thermocollante 8.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Procédé de transfert à chaud sur un textile (13) d'un complexe multicouche (1) formé de plusieurs couches (4) thermoplastiques superposées, dont une couche (5) à base de polyuréthane et une couche expansible (6) contenant un plastisol de polychlorure de vinyle (11) gélifié et un agent d'expansion à chaud (12) non expansé, afin de former sur ce textile (13) un marquage ou une décoration, **caractérisé en ce qu'**il comprend les étapes suivantes :
- placer le complexe multicouche (1) sur la face avant visible du textile (13), sa couche (5) à base de polyuréthane étant la plus éloignée du textile (13) afin de constituer après transfert une couche décorative visible sur la face avant visible du textile (13) ;
- appliquer des conditions de température et de pression provoquant l'adhésion du complexe multicouche (1) sur la face avant visible du textile (13) et l'expansion simultanée de sa couche expansible (6).

2. Procédé de transfert selon la revendication 1 **caractérisé en ce que** l'on utilise un complexe multicouche (1) dont la couche (5) à base de polyuréthane et la couche expansible (6) sont de deux couleurs différentes afin de créer un effet de liseré autour de la couche décorative, visible sur la face avant du textile (13) une fois la couche expansible (6) expansée.

3. Procédé de transfert selon la revendication 1 ou 2 **caractérisé en ce que**, avant de placer le complexe multicouche (1) sur la face avant visible du textile (13), on le prépare de manière qu'il présente la forme ou le motif du marquage ou de la décoration à former sur le textile (13).

4. Procédé de transfert selon la revendication 3 **caractérisé en ce que** l'étape de préparation du complexe multicouche (1) comprend au moins une opération choisie parmi les opérations suivantes : impression d'un motif sur la couche (5) à base de polyuréthane, découpage, et échenillage.

5. Procédé de transfert selon l'une quelconque des revendications 1 à 4 **caractérisé en ce que** lesdites conditions de température et de pression sont obtenues au moyen d'une presse à plateau chauffant pour transfert sur textile.

6. Procédé de transfert selon l'une quelconque des revendications 1 à 5 **caractérisé en ce que** lesdites conditions de température et de pression correspondent à une température comprise entre 160 et 170°C et une pression voisine de deux bars, et sont appliquées pendant une durée comprise entre 10 et 30 secondes.

7. Complexe multicouche (1) transférable à chaud sur la face avant visible d'un textile (13) par un procédé de transfert selon l'une quelconque des revendications 1 à 6, complexe formé de plusieurs couches (4) thermoplastiques superposées, **caractérisé en ce qu'**il comprend au moins :
- une couche (5) à base de polyuréthane, destinée à être la couche décorative supérieure visible, une fois le complexe multicouche (1) transféré sur la face avant visible du textile (13), et
- une couche expansible (6), contenant un plastisol de polychlorure de vinyle (11) gélifié et un agent d'expansion à chaud (12) non expansé,
et **en ce que** la couche (5) à base de polyuréthane et la couche expansible (6) sont de deux couleurs différentes afin de créer un effet de liseré autour de la couche décorative (5) une fois la couche expansible (6) expansée.

8. Complexe multicouche (1) selon la revendication 7 **caractérisé en ce que** la couche à base de polyuréthane (5) est opaque, teintée, ou imprimable.

9. Complexe multicouche (1) selon la revendication 7 ou 8 **caractérisé en ce que** l'agent d'expansion à chaud (12) comprend des microsphères constituées d'une enveloppe thermoplastique renfermant un gaz.

10. Complexe multicouche (1) selon l'une quelconque des revendications 7 à 9 **caractérisé en ce que** la plage de température d'expansion de l'agent d'expansion à chaud (12) comprend une température de transfert à chaud du complexe multicouche (1) sur un textile (13).

11. Complexe multicouche (1) selon l'une quelconque des revendications 7 à 10 **caractérisé en ce qu'**il comporte en outre une ou plusieurs couches (4) choisies parmi : une couche thermocollante (8), une couche support (7), et une couche opacifiante.

12. Complexe multicouche (1) selon l'une quelconque des revendications 7 à 11 **caractérisé en ce qu'**il comporte une couche thermocollante (8) à base d'un co-polyester ou de polyuréthane.

13. Complexe multicouche (1) selon l'une quelconque des revendications 7 à 12 **caractérisé en ce qu'**il comporte une couche support (7) à base de polyester, traitée pour être anti-adhérente.

## Patentansprüche

1. Verfahren zur Wärmeübertragung auf Textilien (1) eines mehrschichtigen Komplexes (1), bestehend aus mehreren übereinanderliegenden thermoplastischen Schichten (4), davon eine Schicht (5) auf Polyurethan-Basis und eine Expansionsschicht (6), die geliertes V inylpolychlorid-Plastisol (11) und ein nicht expandiertes warmexpandierendes Treibmittel (12) enthält, um auf dieser Textilie (13) eine Kennzeichnung oder eine Dekoration anzubringen, **dadurch gekennzeichnet, dass** es die folgenden Stufen umfasst:
- den mehrschichtigen Komplex (1) auf die sichtbare Vorderseite der Textilie (13) legen, wobei die Schicht (5) auf Polyurethan- Basis am weitesten von der Textilie (13) entfernt sein muss, um nach der Übertragung eine sichtbare Dekorschicht auf der Vorderseite der Textilie (13) zu bilden;
- die Temperatur- und Druckbedingungen anwenden die bewirken, dass der mehrschichtige Komplex (1) an der sichtbaren Vorderseite der Textilie (13) haftet, und die Expansionsschicht (6) sich gleichzeitig ausdehnt.

2. Übertragungsverfahren nach Anspruch 1, **dadurch gekennzeichnet, dass** ein mehrschichtiger Komplex (1) verwendet wird, dessen Schicht (5) auf Polyurethan-Basis und dessen Expansionsschicht (6) zwei unterschiedliche Farben haben, um einen Kanteneffekt um die Dekorschicht zu erzeugen, der auf der Vorderseite der Textilie (13) sichtbar ist, sobald die Expansionsschicht (6) sich ausgedehnt hat.

3. Übertragungsverfahren nach Anspruch 1 oder 2, **dadurch gekennzeichnet, dass** vor dem Auflegen des mehrschichtigen Komplexes (1) auf die sichtbare Vorderseite der Textilie (13) dieser so vorbereitet wird, dass er die Form des Kennzeichnungs- oder Dekorationsmotivs, das auf der Textilie (13) gebildet werden soll, aufweist.

4. Übertragungsverfahren nach Anspruch 3, **dadurch gekennzeichnet, dass** die Stufe der Vorbereitung des mehrschichtigen Komplexes (1) mindestens einen Arbeitsgang aus den folgenden Arbeitsgängen enthält: Druck eines Motivs auf die Schicht (5) auf Polyurethan- Basis, Ausschneiden und Gitterabzug.

5. Übertragungsverfahren nach einem der Ansprüche 1 bis 4, **dadurch gekennzeichnet, dass** die genannten Temperatur- und Druckbedingungen durch eine Heizplattenpresse für den Übertragungsdruck auf Textilien erzielt werden.

6. Übertragungsverfahren nach einem der Ansprüche 1 bis 5, **dadurch gekennzeichnet, dass** die genannten Temperatur- und Druckbedingungen einer Temperatur zwischen 160 und 170°C und einem Druck nahe zwei Bar entsprechen und während eines Zeitraums zwischen 10 und 30 Sekunden aufgebracht werden.

7. Mehrschichtiger Komplex (1), geeignet für die Wärmeübertragung auf die sichtbare Vorderseite einer Textilie (13) durch ein Übertragungsverfahren nach einem der Ansprüche 1 bis 6, der aus mehreren übereinanderliegenden thermoplastischen Schichten (4) besteht, **dadurch gekennzeichnet, dass** er mindestens umfasst:
- eine Schicht (5) auf Polyurethan- Basis, die die oberste sichtbare Dekorschicht bilden soll, sobald der mehrschichtige Komplex (1) auf die sichtbare Vorderseite der Textilie (13) übertragen wurde, und
- eine Expansionsschicht (6), die geliertes Vinylpolychlorid-Plastisol (11) enthält und ein nicht expandiertes warmexpandierendes Treibmittel (12),
und dadurch, dass die Schicht (5) auf Polyurethan- Basis und die Expansionsschicht (6) zwei unterschiedliche Farben haben, um einen Kanteneffekt um die Dekorschicht (5) zu erzeugen, sobald die Expansionsschicht (6) sich ausgedehnt hat.

8. Mehrschichtiger Komplex (1) nach Anspruch 7, **dadurch gekennzeichnet, dass** die Schicht (5) auf Polyurethan- Basis opak, gefärbt oder bedruckbar ist.

9. Mehrschichtiger Komplex (1) nach Anspruch 7 oder 8, **dadurch gekennzeichnet, dass** das warmexpandierende Treibmittel (12) Mikrokügelchen enthält, die aus einer thermoplastischen, ein Gas enthaltenden Hülle bestehen.

10. Mehrschichtiger Komplex (1) nach einem der vorstehenden Ansprüche 7 bis 9, **dadurch gekennzeichnet, dass** der Expansionstemperaturbereich des warmexpandierenden Treibmittels (12) eine Temperatur für die Wärmeübertragung des mehrschichtigen Komplexes (1) auf eine Textilie (13) umfasst.

11. Mehrschichtiger Komplex (1) nach einem der vorstehenden Ansprüche 7 bis 10, **dadurch gekennzeichnet, dass** er außerdem eine oder mehrere Schichten (4) umfasst, die ausgewählt werden aus: einer heißklebenden Schicht (8), einer Trägerschicht (7) und einer Deckschicht.

12. Mehrschichtiger Komplex (1) nach einem der vorstehenden Ansprüche 7 bis 11, **dadurch gekennzeichnet, dass** er eine heißklebenden Schicht (8) auf Basis eines Co-Polyesters oder Polyurethans enthält.

13. Mehrschichtiger Komplex (1) nach einem der vorstehenden Ansprüche 7 bis 12, **dadurch gekennzeichnet, dass** er eine Trägerschicht (7) auf Polyesterbasis enthält, die antihaftbehandelt ist.

## Claims

1. Heat transfer method for transferring onto a textile (13) a multilayer complex (1) formed of a plurality of superposed thermoplastic layers (4), including a layer (5) based on polyurethane, and an expandable layer (6) containing a gelled polyvinyl chloride plastisol (11) and a non-expanded heat-expandable agent (12), in order to form a marking or a decoration on said textile (13), **characterized in that** it comprises the following steps:
- placing the multilayer complex (1) on the visible front face of the textile (13), its polyurethane-based layer (5) being the layer that is the furthest away from the textile (13) so that, after transfer, it constitutes a visible decorative layer on the visible front face of the textile (13);
- applying temperature and pressure conditions that cause the multilayer complex (1) to adhere to the visible front face of the textile (13) and simultaneously cause its expandable layer (6) to expand.

2. Transfer method according to claim 1, **characterized in that** a multilayer complex (1) is used in which the polyurethane-based layer (5) and the expandable layer (6) are of two different colors so as to create a border effect around the decorative layer, visible on the front face of the textile (13) once the expandable layer (6) has expanded.

3. Transfer method according to claim 1 or 2, **characterized in that**, before the multilayer complex (1) is placed on the visible front face of the textile (13), it is prepared such that it has the shape or the motif of the marking or of the decoration to be formed on the textile (13).

4. Transfer method according to claim 3, **characterized in that** the step of preparing the multilayer complex (1) comprises at least one operation chosen from among the following operations: printing a motif on the polyurethane-based layer (5), cutting out, and waste stripping.

5. Transfer method according to any one of claims 1 to 4, **characterized in that** said temperature and pressure conditions are obtained by means of a heater platen press for performing transfer onto textiles.

6. Transfer method according to any one of claims 1 to 5, **characterized in that** said temperature and pressure conditions correspond to a temperature lying in the range 160°C to 170°C, and to a pressure in the vicinity of two bars, and they are applied for a duration lying in the range 10 seconds to 30 seconds.

7. Multilayer complex (1) that is heat-transferable onto the visible front face of a textile (13) by a transfer method according to any one of claims 1 to 6, said complex being formed of a plurality of superposed thermoplastic layers (4), and being **characterized in that** it comprises at least:
- a polyurethane-based layer (5) designed to be the visible upper decorative layer, once the multilayer complex (1) has been transferred onto the visible front face of the textile (13); and
- an expandable layer (6), containing a gelled polyvinyl chloride plastisol (11) and a non-expanded heat-expandable agent (12);
and **in that** the polyurethane-based layer (5) and the expandable layer (6) are of two different colors so as to create a border effect around the decorative layer (5) once the expandable layer (6) has expanded.

8. Multilayer complex (1) according to claim 7, **characterized in that** the polyurethane-based layer (5) is opaque, dyed, or printable.

9. Multilayer complex (1) according to claim 7 or 8, **characterized in that** the heat-expandable agent (12) comprises microspheres constituted by thermoplastic casings enclosing a gas.

10. Multilayer complex (1) according to any one of claims 7 to 9, **characterized in that** the expansion temperature range of the heat-expandable agent (12) comprises a heat transfer temperature at which the multilayer complex (1) is transferred onto a textile (13).

11. Multilayer complex (1) according to any one of claims 7 to 10, **characterized in that** it further includes one or more layers (4) chosen from among: a heat-fusible layer (8), a backing layer (7), and an opacifying layer.

12. Multilayer complex (1) according to any one of claims 7 to 11, **characterized in that** it includes a heat-fusible layer (8) based on a co-polyester or on polyurethane.

13. Multilayer complex (1) according to any one of claims 7 to 12, **characterized in that** it includes a backing layer (7) based on polyester, and treated to be non-stick.
